# EUROPEAN PATENT SPECIFICATION

(11) **EP 3 556 572 B1**
(45) Date of publication and mention of the grant of the patent: **07.09.2022**
(21) Application number: 18181999.6
(22) Date of filing: 05.07.2018
(51) Int. Cl.: B60B 3/16, F16B 33/00, F16B 37/14, B60B 27/06

(54) **FASTENER FOR FASTENING A WHEEL RIM TO A WHEEL HUB**
BEFESTIGUNGSMITTEL ZUR BEFESTIGUNG EINER RADFELGE AN EINER RADNABE
ATTACHE DE FIXATION D'UNE JANTE DE ROUE À UN MOYEU DE ROUE

(30) Priority: 19.04.2018 TW 107205105 U
(43) Date of publication of application: 23.10.2019
(73) Proprietor: Gourmet Equipment (Taiwan) Corporation, 10445 Taipei (TW)
(72) Inventor: Chang, Peter J.H., Taipei 10445 (TW)
(74) Representative: V.O.

(56) References cited:
- EP-A1- 1 426 637
- EP-A1- 3 282 138
- US-A- 5 711 581

## Description

The disclosure relates to a fastener, and more particularly to a fastener for fastening a wheel rim to a wheel hub.

A wheel rim of a vehicle is fastened to a wheel hub through a plurality of fasteners. The wheel hub is typically provided with a plurality of threaded holes or threaded studs, and each of the fasteners is configured as a bolt (when the wheel hub is provided with the threaded holes) or a nut (when the wheel hub is provided with the threaded studs).

A conventional fastener has a zinc coating layer, which is a soft metal that is capable of fittingly abutting against the surface of the wheel rim to maintain effective torque retention for a prolonged period of time, thereby ensuring that the wheel rim is fixed to the wheel hub. However, the zinc exposed from the wheel rim tends to be oxidized and eroded after long-term exposure to the atmosphere. An alternative fastener is provided to have a chromium coating layer. Chromium is colorful and is visually appealing. Compared with zinc, chromium also possesses superior erosion resistance. However, the hardness of chromium may cause damage to the wheel rim when fixing the wheel rim to the wheel hub. Moreover, chromium has poor adhesive properties, which may eventually cause loosening of the fastener, resulting in detachment of the wheel rim from the wheel hub. Although other surface treatments may be applied to the fastener to improve visual appearance thereof, they may also encounter the abovementioned issues.

Therefore, an object of the disclosure is to provide a fastener that can alleviate at least one of the drawbacks of the prior art.

For that purpose the present invention provides a fastener according to the appended independent claim 1. Preferable embodiments of the invention are provided by the appended dependent claims 2-9.

It is noted that EP3282138A1 discloses a fastener according to the pre-characterizing portion of the appended independent claim 1.

Hence, according to an aspect of the present disclosure, a fastener is adapted to fasten a wheel rim to a wheel hub. The wheel rim has a plurality of hole-defining walls that respectively define a plurality of installation holes.

The fastener includes a main body and a sleeve. The main body extends along a central axis thereof, and is adapted to engage the wheel hub. The main body has an abutting portion that corresponds in shape to a corresponding one of the installation holes and that extends into the corresponding one of the installation holes. The sleeve is retained on the abutting portion of the main body and has a contacting surface, which abuts against a corresponding one of the hole-defining walls defining the corresponding one of the installation holes.

Other features and advantages of the disclosure will become apparent in the following detailed description of the embodiments with reference to the accompanying drawings, of which:
FIG. 1 is a fragmentary perspective view, which illustrates a first embodiment of a fastener of this disclosure adapted to fasten a wheel rim to a wheel hub;
FIG. 2 is a perspective view of the first embodiment;
FIG. 3 is a schematic partly sectional view of the first embodiment:
FIG. 4 is a perspective view of a second embodiment of the fastener according to the present disclosure;
FIG. 5 is a schematic partly sectional view of the second embodiment;
FIG. 6 is a perspective view of a third embodiment of the fastener according to the present disclosure;
FIG. 7 is a schematic partly sectional view of the third embodiment;
FIG. 8 is a perspective view of a fourth embodiment of the fastener according to the present disclosure;
FIG. 9 is a schematic partly sectional view of the fourth embodiment;
FIG. 10 is a perspective view of a fifth embodiment of the fastener according to the present disclosure;
FIG. 11 is a schematic partly sectional view of the fifth embodiment;
FIG. 12 is a perspective view of a sixth embodiment of the fastener according to the present disclosure;
FIG. 13 is a schematic partly sectional view of the sixth embodiment;
FIG. 14 is a perspective view of a seventh embodiment of the fastener according to the present disclosure;
FIG. 15 is a schematic partly sectional view of the seventh embodiment;
FIG. 16 is a perspective view of an eighth embodiment of the fastener according to the present disclosure;
FIG. 17 is a schematic partly sectional view of the eighth embodiment;
FIG. 18 is a perspective view of a ninth embodiment of the fastener according to the present disclosure;
FIG. 19 is a schematic partly sectional view of the ninth embodiment;
FIG. 20 is a perspective view of a tenth embodiment of the fastener according to the present disclosure; and
FIG. 21 is a schematic partly sectional view of the tenth embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

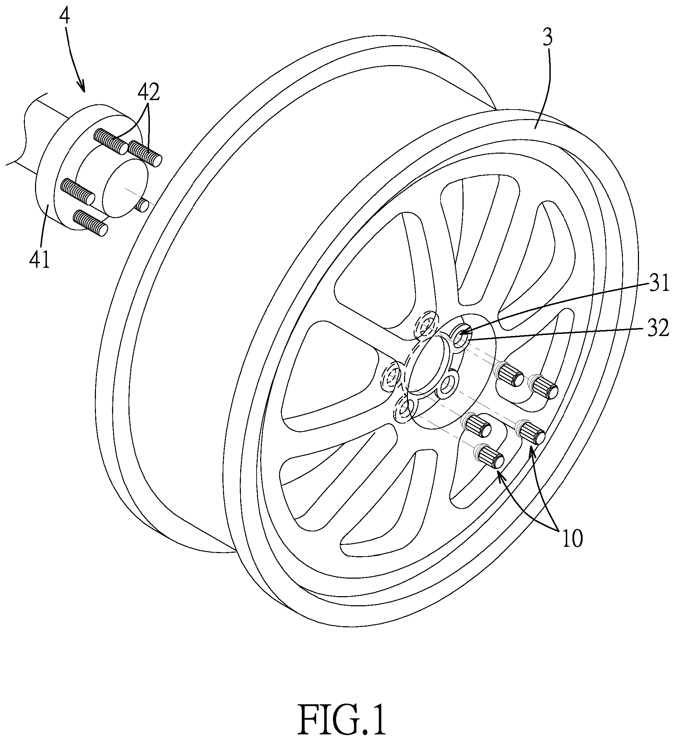

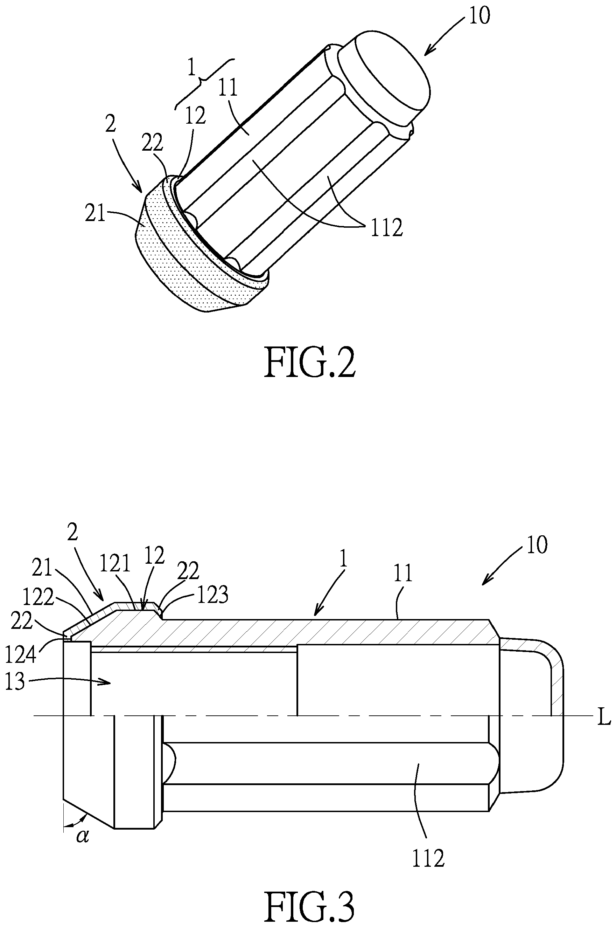

Referring to FIGS. 1 to 3, a first embodiment of a fastener 10 according to the present disclosure is adapted to fasten a wheel rim 3 to a wheel hub 4. In this embodiment, the wheel rim 3 is fastened to the wheel hub 4 by a plurality of the fasteners 10 (see FIG. 1). The wheel rim 3 has a plurality of annular hole-defining walls 32 that respectively define a plurality of circular installation holes 31. The wheel hub 4 includes a hub body 41 and a plurality of threadedly engaging sections 42 extending from the hub body 41. In assembly, one side of the wheel rim 3 is moved close to the wheel hub 4, and each of the threadedly engaging sections 42 of the wheel hub 4 extends into a respective one of the installation holes 31. Afterwards, the fasteners 10 respectively extend into the installation holes 31 from the other side of the wheel rim 3 to respectively engage the threadedly engaging sections 42 of the wheel hub 4 so as to fasten the wheel rim 3 to the wheel hub 4.

Only one of the fasteners 10, one of the installation holes 31, one of the hole-defining walls 32 and one of the threadedly engaging sections 42 of the wheel hub 4 are described below for the sake of brevity.

In this embodiment, the fastener 10 includes a main body 1 and a sleeve 2. The main body 1 is column shaped, extends along a central axis (L) thereof. The main body 1 of the fastener 10 is adapted to threadedly engage the threadedly engaging section 42 of the wheel hub 4. The main body 1 has an abutting portion 12 that corresponds in shape to the installation hole 31, and that extends into the installation hole 31. The main body 1 further has an extending portion 11 that extends from the abutting portion 12 along the central axis (L) in a direction away from the wheel hub 4.

The sleeve 2 is sleeved and retained on the abutting portion 12 of the main body 1, and has a contacting surface 21, which abuts against the hole-defining wall 32 defining the installation hole 31. Specifically, the abutting portion 12 has a first end 123 proximate to the extending portion 11, a second end 124 opposite to the first end 123 and distal from the extending portion 11, a uniform-diameter third section 121 that extends from the first end 123 toward the second end 124 and that has an outer diameter larger than an outer diameter of the extending portion 11 of the main body 1, and a varied-diameter fourth section 122 that extends from the third section 121 to the second end 124, that has an outer diameter gradually reducing in a direction away from the third section 121 and toward the second end 124, and that presses the sleeve 2 against the hole-defining wall 32. In this embodiment, the fourth section 122 is frusto-conical, and has an outer surface inclined relative to and extending from the third section 121 in a direction toward the second end 124. The sleeve 2 corresponds in shape to the abutting portion 12 of the main body 1, and has two flange portions 22 that respectively abut against the first and second ends 123, 124 of the abutting portion 12 such that the sleeve 2 is positioned on the abutting portion 12. It is worth mentioning that, by changing the distance between the flange portions 22, the sleeve 2 can be controlled to be fixed to the abutting portion 12 or to be rotatable relative to the abutting portion 12. Specifically, when the flange portions 22 tightly and respectively abut against the first and second ends 123, 124 of the abutting portion 12, the sleeve 2 is fixed to the abutting portion 12 and is not rotatable relative to the abutting portion 12. When the flange portions 22 respectively abut against the first and second ends 123, 124 of the abutting portion 12 in a relatively loose manner, the sleeve 2 is rotatable relative to the abutting portion 12. In this case, when the fastener 10 is operated to engage the threadedly engaging section 42 of the wheel hub 4, the sleeve 2 is pressed against the hole-defining wall 32 and only the main body 1 of the fastener 10 is rotatable relative to the hole-defining wall 32, thereby preventing the sleeve 2 from scratching the hole-defining wall 32.

Since the main body 1 and the sleeve 2 are separately manufactured and then assembled together, surface treatment can be separately applied to the main body 1 and the sleeve 2. In this embodiment, the main body 1 may be coated with chromium, and the sleeve 2 may be coated with zinc. When the fastener 10 is engaged with the threadedly engaging section 42 of the wheel hub 4, the zinc-coated sleeve 2 can tightly abut against the hole-defining wall 32, so as to prevent relative rotation between the wheel rim 3 and the fastener 10, thereby reducing the risk of detachment of the wheel rim 3 from the wheel hub 4. Moreover, a portion of the chromium-coated main body 1 of the fastener 10 exposed from the wheel rim 3 is more corrosion resistant and more aesthetically appearing. In practical use, the main body 1 may be coated with other metals, and each of the main body 1 and the sleeve 2 may be made of different metals according to practical requirements.

In this embodiment, the threadedly engaging section 42 of the wheel hub 4 is configured as a threaded stud, and the main body 1 is configured as a nut and has a threaded hole 13 adapted for threaded engagement with the threadedly engaging section 42 of the wheel hub 4. The threaded hole 13 has an opening adjacent to the second end 124 of the abutting portion 12, and extends from the abutting portion 12 to the extending portion 11. The inclination degree of the outer surface of the fourth section 122 may be changed according to practical requirements. In this embodiment, an included angle α between the outer surface of the fourth section 122 and an end surface of the second end 124 is 60 degrees. An outer surrounding surface of the extending portion 11 of the main body 1 may be configured to facilitate operation of a user. In this embodiment, a plurality of spline grooves 112 are formed in the outer surrounding surface of the extending portion 11 of the main body 1 and extend along the central axis (L).

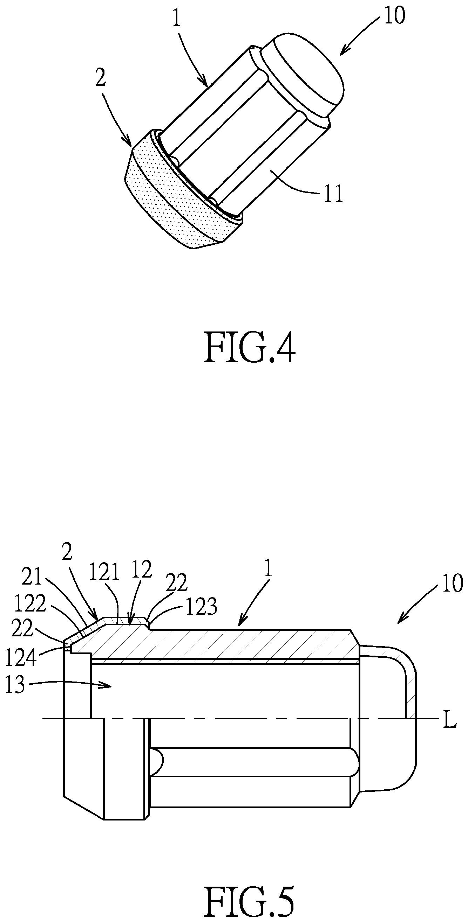

FIGS. 4 and 5 show a second embodiment of the fastener 10 according to the present disclosure. The second embodiment has a dimension slightly smaller than that of the first embodiment.

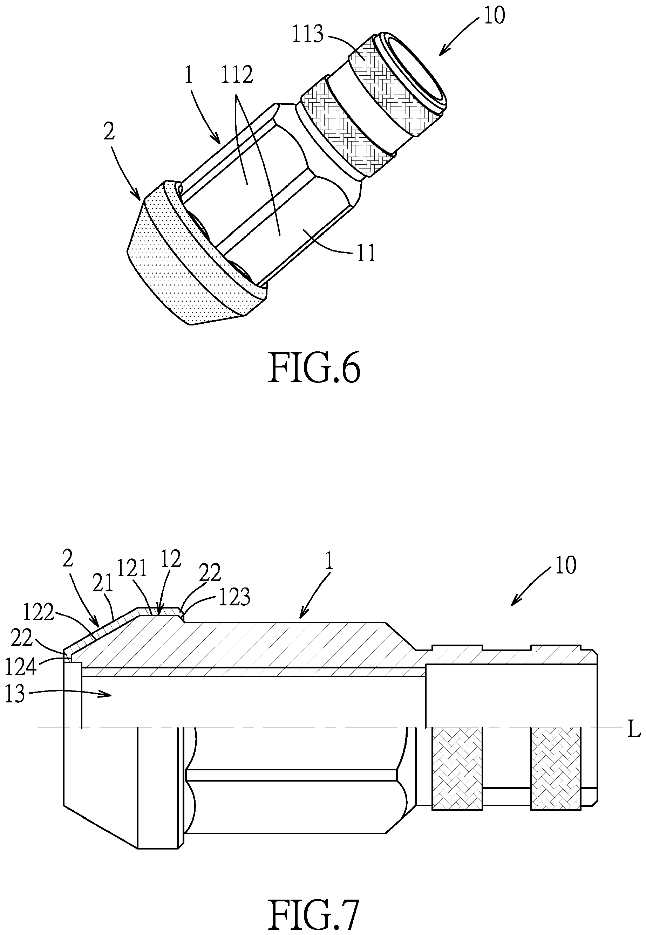

FIGS. 6 and 7 show a third embodiment of the fastener 10 according to the present disclosure that has a structure modified from that of the first embodiment. In the third embodiment, the extending portion 11 is provided with a knurled gripping section 113 that is opposite to the abutting portion 12 and that facilitates operation by the user.

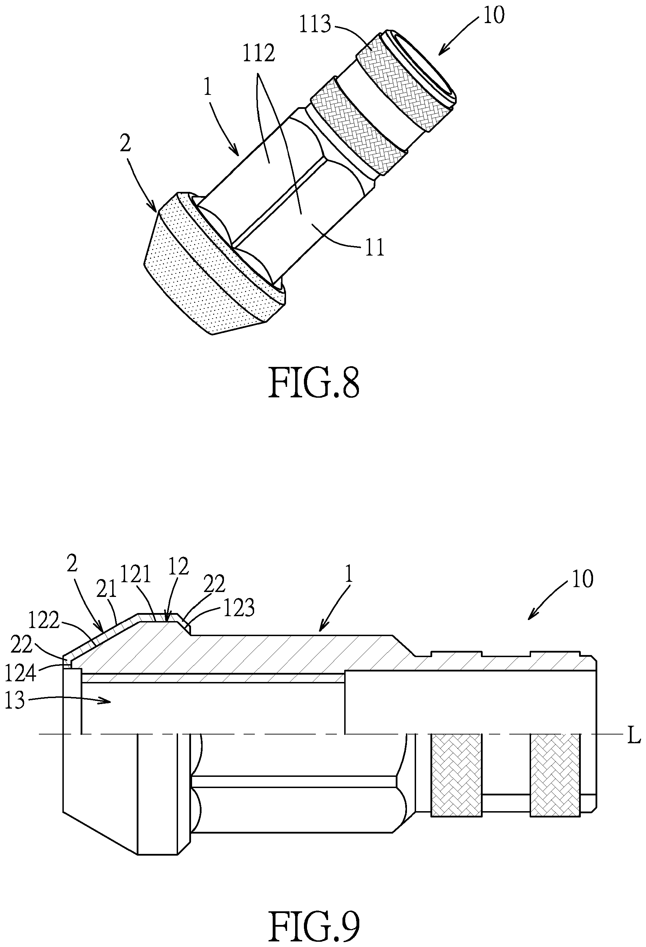

FIGS. 8 and 9 show a fourth embodiment of the fastener 10 according to the present disclosure that has a structure modified from that of the third embodiment. In the fourth embodiment, the hex portion is smaller than that of the third embodiment.

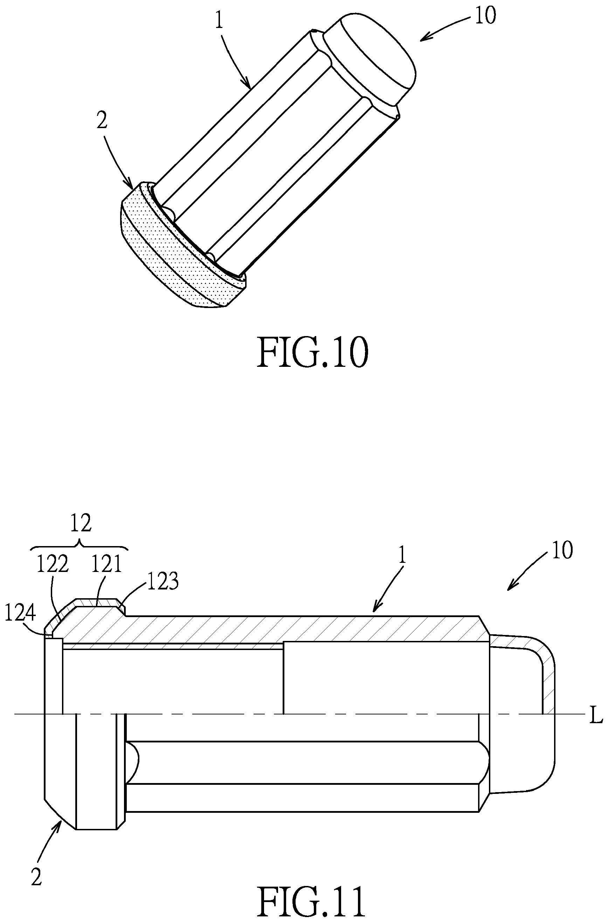

FIGS. 10 and 11 show a fifth embodiment of the fastener 10 according to the present disclosure that has a structure modified from that of the first embodiment. In the fifth embodiment, the fourth section 122 has an arc outer surface that is connected between the second end 124 and the third section 121. It is worth mentioning that a curvature radius of the arc outer surface may be, such as 12 mm, 13 mm or 14 mm, and may be changed according to practical requirements.

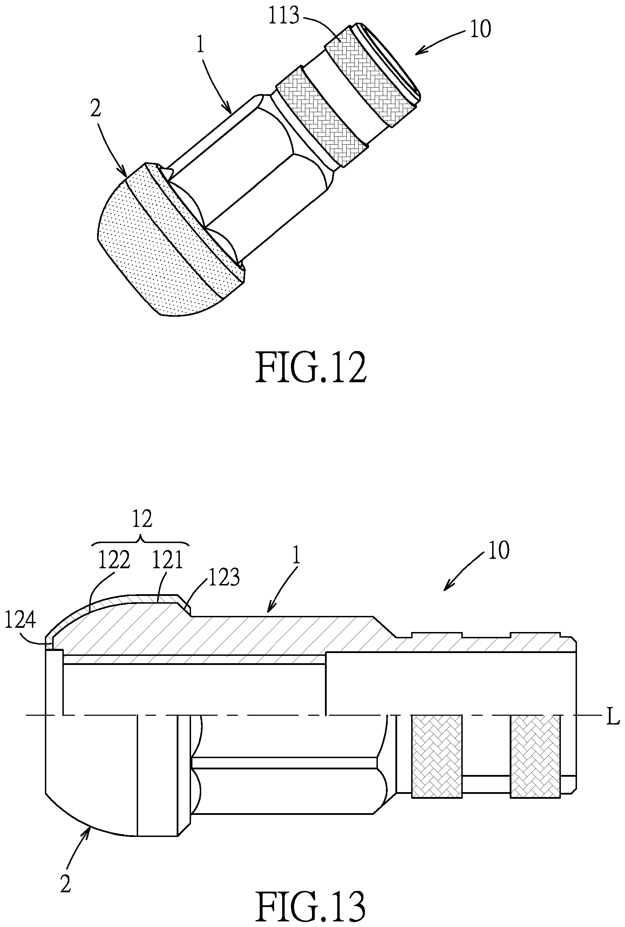

FIGS. 12 and 13 show a sixth embodiment of the fastener 10 according to the present disclosure that has a structure modified from that of the third embodiment. In the sixth embodiment, the fourth section 122 has the arc outer surface that is connected between the second end 124 and the third section 121. Curvature radius of the arc outer surface may be changed according to practical requirements.

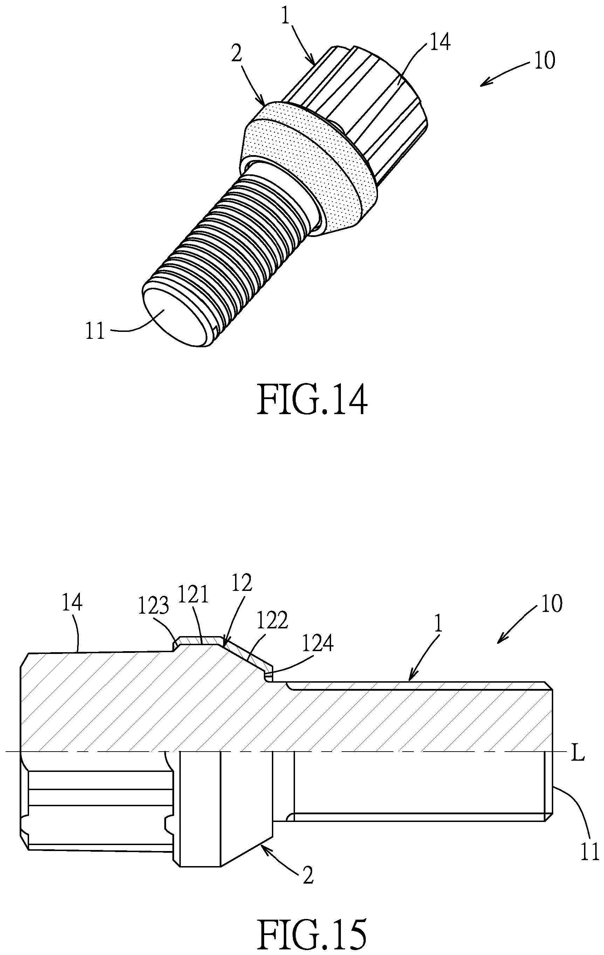

Referring to FIGS. 14 and 15, in a seventh embodiment of the fastener 10, the main body 1 of the fastener 10 is configured as a bolt, in which the extending portion 11 of the main body 1 is configured as external thread. The main body 1 further has a head portion 14 that is connected to the abutting portion 12 such that the abutting portion 12 is located between the extending portion 11 and the head portion 14. In this embodiment, the threadedly engaging section 42 of the wheel hub 4 is configured as a threaded hole (not shown) for threaded engagement with the extending portion 11 of the fastener 10.

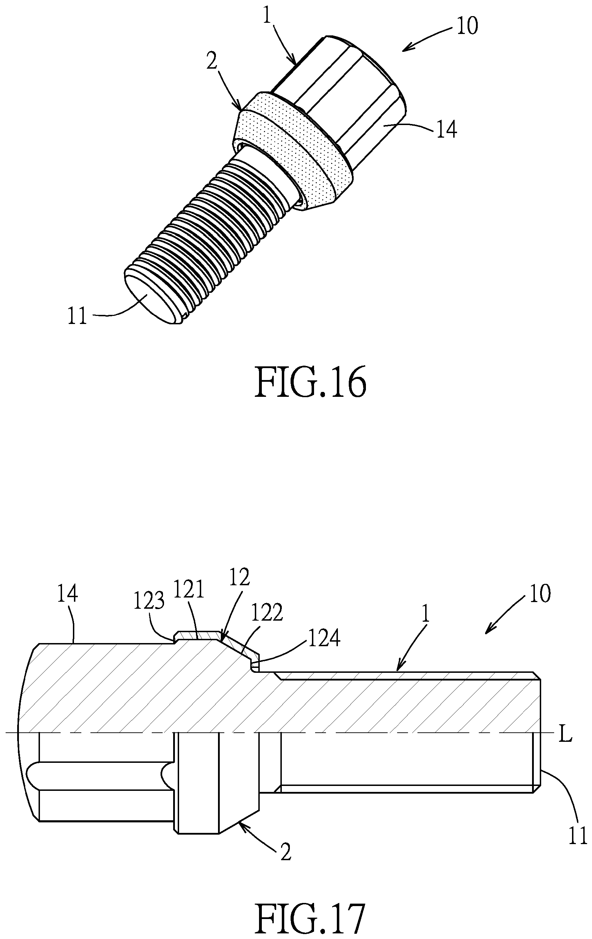

FIGS. 16 and 17 show an eighth embodiment of the fastener 10 according to the present disclosure that has a structure modified from that of the seventh embodiment. In the eighth embodiment, the head portion 14 has fewer grooves than that of the seventh embodiment.

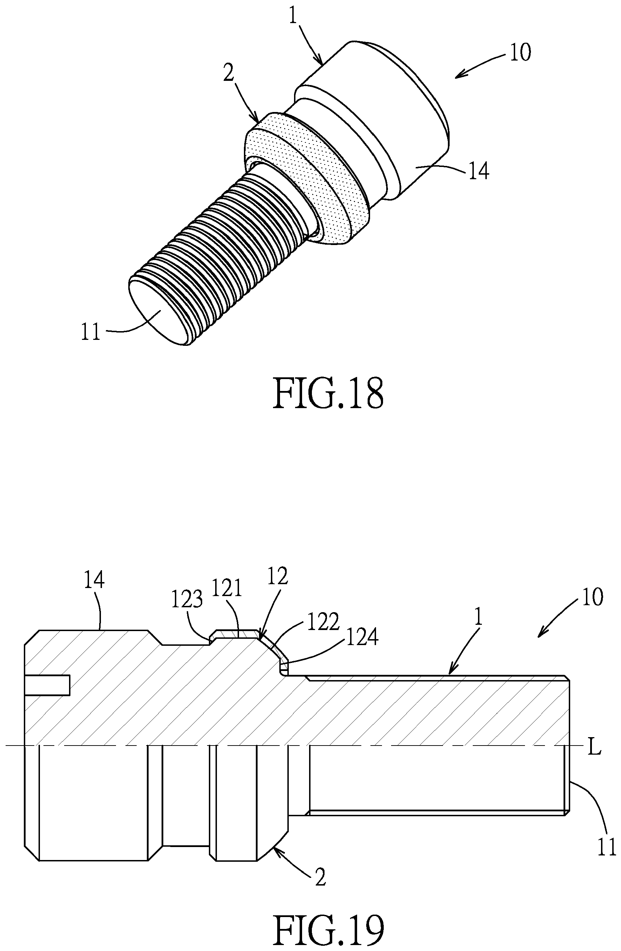

FIGS. 18 and 19 show a ninth embodiment of the fastener 10 according to the present disclosure that has a structure modified from that of the seventh embodiment. In the ninth embodiment, the head portion 14 has a structure different from that of the seventh embodiment, and the fourth section 122 has the arc outer surface that is connected between the second end 124 and the third section 121. Curvature radius of the arc outer surface may be changed according to practical requirements.

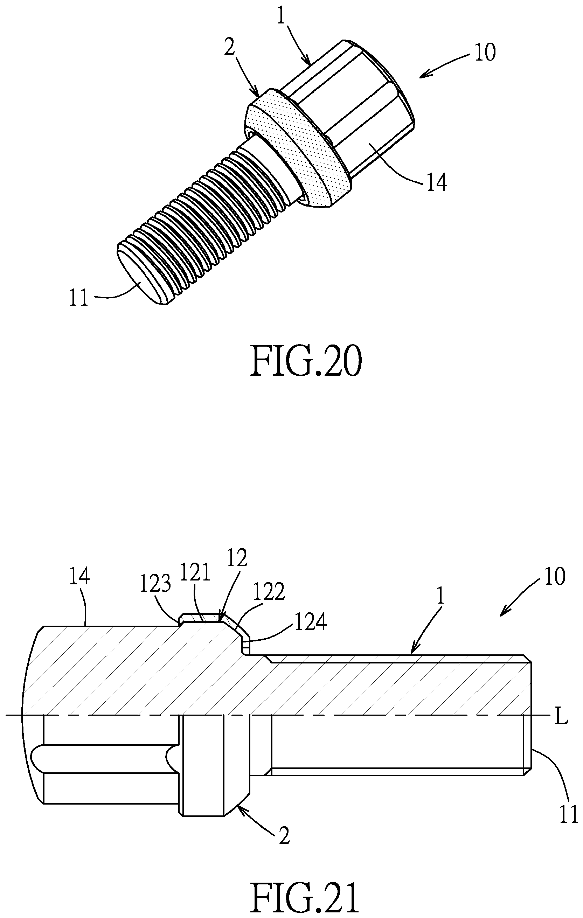

FIGS. 20 and 21 show a tenth embodiment of the fastener 10 according to the present disclosure that has a structure modified from that of the seventh embodiment. In the tenth embodiment, the head portion 14 has a structure different from that of the seventh embodiment, and the fourth section 122 has the arc outer surface that is connected between the second end 124 and the third section 121. Curvature radius of the arc outer surface may be changed according to practical requirements.

It is worth mentioning that the dimension and structure of the fastener 10 may be adjusted according to practical requirements, and may be designed for a specific hand tool to be theftproof.

To sum up, the main body 1 and the sleeve 2 of the fastener 10 according to the present disclosure can be separately processed by different surface treatments to fulfill both aesthetical appearance and safety. In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A fastener (10) for fastening a wheel rim (3) to a wheel hub (4), the fastener (10) comprising:
- a main body (1) that extends along a central axis (L) thereof, and that has an abutting portion (12) and an extending portion (11) that extends from said abutting portion (12) along the central axis (L); and
- a sleeve (2) that is retained on said abutting portion (12) of said main body (1), and that has a contacting surface (21);
wherein the fastener (10) is suitable for a fastening condition in which the fastener (10) is fastening a wheel rim (3) to a wheel hub (4), the wheel rim (3) having a plurality of hole-defining walls (32) that respectively define a plurality of installation holes (31), wherein in said fastening condition the fastener engages the wheel hub (4) and said abutting portion (12) extends into a corresponding one of the installation holes (31) and corresponds in shape to said corresponding one of the installation holes (31), and said contacting surface (21) abuts against a corresponding one of the hole-defining walls (32) defining the corresponding one of the installation holes (31), wherein
- said abutting portion (12) has a first end (123), a second end (124) opposite to said first end (123), a third section (121) that extends from said first end (123) toward said second end (124) and that has an outer diameter larger than an outer diameter of said extending portion (11) of said main body (1), and a fourth section (122) that extends from said third section (121) to said second end (124), wherein
- in said fastening condition of the fastener (10) said fourth section (122) presses said sleeve (2) against the corresponding one of the hole-defining walls (32);**characterized in that** ;
- said sleeve (2) corresponds in shape to said abutting portion (12) of said main body (1) and has two flange portions (22) that respectively abut against said first and second ends (123, 124) of said abutting portion (12) such that said sleeve (2) is positioned on said abutting portion (12).

2. The fastener (10) as claimed in claim 1, wherein said sleeve (2) is coated with zinc.

3. The fastener (10) as claimed in any one of claims 1 and 2, wherein said main body (1) is coated with chromium.

4. The fastener (10) as claimed in any one of claims 1 to 3, wherein said fourth section (122) is frusto-conical.

5. The fastener (10) as claimed in any one of claims 1 to 4, wherein said fourth section (122) has an outer surface inclined from said third section (121) toward said second end (124).

6. The fastener (10) as claimed in any one of claims 1 to 5, wherein said fourth section (122) has an arc outer surface connected between said second end (124) and third section (121).

7. The fastener (10) as claimed in any one of claims 1 to 6, wherein said main body (1) is a nut and has a threaded hole (13) having an opening adjacent to said second end (124) of said abutting portion (12), wherein said threaded hole (13) is adapted for threaded engagement with the wheel hub (4) in said fastening condition of the fastener (10).

8. The fastener (10) as claimed in any one of claims 1 to 6, wherein said main body (1) is abolt, said extending portion (11) of said main body (1) being externally threaded, said main body (1) further having a head portion (14) that is connected to said abutting portion (12) such that said abutting portion (12) is located between said extending portion (11) and said head port ion (14) .

9. The fastener (10) as claimed in any one of claims 1 to 8, wherein said sleeve (2) is rotatable relative to said abutting portion (12).

## Patentansprüche

1. Befestigungselement (10) zum Befestigen einer Radfelge (3) an einer Radnabe (4), wobei das Befestigungselement (10) umfasst:
- einen Hauptkörper (1), der sich entlang einer Mittelachse (L) davon erstreckt und der ein Anschlagteil (12) und ein Verlängerungsteil (11) aufweist, das sich von dem Anschlagteil (12) entlang der Mittelachse (L) erstreckt; und
- eine Hülse (2), die auf dem Anschlagteil (12) des Hauptkörpers (1) gehalten wird und die eine Kontaktfläche (21) aufweist;
wobei das Befestigungselement (10) für einen Befestigungszustand geeignet ist, in dem das Befestigungselement (10) eine Radfelge (3) an einer Radnabe (4) befestigt, wobei die Radfelge (3) mehrere lochdefinierende Wände (32) aufweist, die jeweils mehrere Montagelöcher (31) definieren, wobei in dem Befestigungszustand das Befestigungselement an der Radnabe (4) eingreift und das Anschlagteil (12) sich in ein entsprechendes der Montagelöcher (31) erstreckt und in seiner Form dem entsprechenden der Montagelöcher (31) entspricht, und die Kontaktfläche (21) an einer entsprechenden der lochdefinierenden Wände (32) anliegt, die das entsprechende der Montagelöcher (31) definieren, wobei
- das Anschlagteil (12) ein erstes Ende (123), ein zweites Ende (124) gegenüber dem ersten Ende (123), einen dritten Abschnitt (121), der sich von dem ersten Ende (123) zu dem zweiten Ende (124) erstreckt, und einen Außendurchmesser aufweist, der größer ist als ein Außendurchmesser des Verlängerungsteils (11) des Hauptkörpers (1), und einen vierten Abschnitt (122) aufweist, der sich von dem dritten Abschnitt (121) zu dem zweiten Ende (124) erstreckt, wobei
- in dem Befestigungszustand des Befestigungselements (10) der vierte Abschnitt (122) die Hülse (2) an die entsprechende der lochdefinierenden Wände (32) drückt; **dadurch gekennzeichnet, dass**
- die Hülse (2) in ihrer Form dem Anschlagteil (12) des Hauptkörpers (1) entspricht und zwei Flanschteile (22) aufweist, die jeweils an dem ersten und zweiten Ende (123, 124) des Anschlagteils (12) anliegen, so dass die Hülse (2) auf dem Anschlagteil (12) positioniert ist.

2. Befestigungselement (10) nach Anspruch 1, wobei die Hülse (2) mit Zink beschichtet ist.

3. Befestigungselement (10) nach einem der Ansprüche 1 und 2, wobei der Hauptkörper (1) mit Chrom beschichtet ist.

4. Befestigungselement (10) nach einem der Ansprüche 1 bis 3, wobei der vierte Abschnitt (122) kegelstumpfförmig ist.

5. Befestigungselement (10) nach einem der Ansprüche 1 bis 4, wobei der vierte Abschnitt (122) eine Außenfläche aufweist, die von dem dritten Abschnitt (121) zum zweiten Ende (124) geneigt ist.

6. Befestigungselement (10) nach einem der Ansprüche 1 bis 5, wobei der vierte Abschnitt (122) eine bogenförmige Außenfläche aufweist, die zwischen dem zweiten Ende (124) und dem dritten Abschnitt (121) verbunden ist.

7. Befestigungselement (10) nach einem der Ansprüche 1 bis 6, wobei der Hauptkörper (1) eine Mutter ist und eine Gewindebohrung (13) mit einer Öffnung neben dem zweiten Ende (124) des Anschlagteils (12) aufweist, wobei die Gewindebohrung (13) für einen Gewindeeingriff mit der Radnabe (4) in dem Befestigungszustand des Befestigungselements (10) ausgelegt ist.

8. Befestigungselement (10) nach einem der Ansprüche 1 bis 6, wobei der Hauptkörper (1) ein Bolzen ist, wobei das Verlängerungsteil (11) des Hauptkörpers (1) ein Außengewinde aufweist, wobei der Hauptkörper (1) ferner ein Kopfteil (14) aufweist, der mit dem Anschlagteil (12) verbunden ist, so dass sich das Anschlagteil (12) zwischen dem Verlängerungsteil (11) und dem Kopfteil (14) befindet.

9. Befestigungselement (10) nach einem der Ansprüche 1 bis 8, wobei die Hülse (2) in Bezug auf das Anschlagteil (12) drehbar ist.

## Revendications

1. Attache (10) pour fixer une jante de roue (3) à un moyeu de roue (4), l'attache (10) comprenant :
- un corps principal (1) qui s'étend le long d'un axe central (L) de celui-ci, et qui présente une partie de butée (12) et une partie d'extension (11) qui s'étend depuis ladite partie de butée (12) le long de l'axe central (L) ; et
- un manchon (2) qui est retenu sur ladite portion de butée (12) dudit corps principal (1) et qui présente une surface de contact (21) ;
dans lequel l'attache (10) convient à une condition de fixation dans laquelle l'attache (10) fixe une jante de roue (3) à un moyeu de roue (4), la jante de roue (3) ayant une pluralité de parois définissant des trous (32 ) qui définissent respectivement une pluralité de trous d'installation (31), dans lequel, dans ladite condition de fixation, l'attache se met en prise avec le moyeu de roue (4) et ladite partie de butée (12) s'étend dans l'un correspondant des trous d'installation (31) et correspond en forme audit trou d'installation correspondant parmi les trous d'installation (31), et ladite surface de contact (21) bute contre l'une correspondante parmi les parois définissant des trous (32) définissant le trou correspondant parmi les trous d'installation (31), dans lequel
ladite partie de butée (12) présente une première extrémité (123), une deuxième extrémité (124) opposée à ladite première extrémité (123), une troisième section (121) qui s'étend de ladite première extrémité (123) vers ladite deuxième extrémité (124) et qui présente un diamètre extérieur supérieur à un diamètre extérieur de ladite partie d'extension (11) dudit corps principal (1), et une quatrième section (122) qui s'étend de ladite troisième section (121) à ladite deuxième extrémité (124), dans lequel
dans ladite condition de fixation de l'attache (10), ladite quatrième section (122) appuie sur ledit manchon (2) contre la paroi correspondante parmi les parois définissant des trous (32) ; **caractérisé en ce que**
- ledit manchon (2) correspond en forme à ladite partie de butée (12) dudit corps principal (1) et comporte deux parties de rebord (22) qui butent respectivement contre lesdites première et deuxième extrémités (123, 124) de ladite partie de butée (12) de sorte que ledit manchon (2) soit positionné sur ladite portion de butée (12).

2. Attache (10) selon la revendication 1, dans laquelle ledit manchon (2) est revêtu de zinc.

3. Attache (10) selon l'une quelconque des revendications 1 et 2, dans laquelle ledit corps principal (1) est revêtu de chrome.

4. Attache (10) selon l'une quelconque des revendications 1 à 3, dans laquelle ladite quatrième section (122) est tronconique.

5. Attache (10) selon l'une quelconque des revendications 1 à 4, dans laquelle ladite quatrième section (122) présente une surface extérieure inclinée depuis ladite troisième section (121) vers ladite deuxième extrémité (124).

6. Attache (10) selon l'une quelconque des revendications 1 à 5, dans laquelle ladite quatrième section (122) présente une surface extérieure en arc connectée entre ladite deuxième extrémité (124) et ladite troisième section (121).

7. Attache (10) selon l'une quelconque des revendications 1 à 6, dans laquelle ledit corps principal (1) est un écrou et présente un trou fileté (13) ayant une ouverture adjacente à ladite seconde extrémité (124) de ladite partie de butée (12), dans laquelle ledit trou fileté (13) est adapté pour être mis en prise par filetage avec le moyeu de roue (4) dans ladite condition de fixation de l'attache (10).

8. Attache (10) selon l'une quelconque des revendications 1 à 6, dans laquelle ledit corps principal (1) est un boulon, ladite partie d'extension (11) dudit corps principal (1) étant filetée extérieurement, ledit corps principal (1) ayant en outre une partie de tête (14) qui est reliée à ladite partie de butée (12) de sorte que ladite partie de butée (12) soit située entre ladite partie d'extension (11) et ladite partie de tête.

9. Attache (10) selon l'une quelconque des revendications 1 à 8, dans laquelle ledit manchon (2) peut être tourné par rapport à ladite partie de butée (12).
